# EUROPEAN PATENT SPECIFICATION

(11) **EP 0 544 932 B1**
(45) Date of publication and mention of the grant of the patent: **19.07.1995**
(21) Application number: 91120593.8
(22) Date of filing: 29.11.1991
(51) Int. Cl.: B25J 19/00

(54) **Robot hand**
Roboterhand
Main de robot

(43) Date of publication of application: 09.06.1993
(73) Proprietor: Yamaha Motor Co., Ltd., Iwata-shi Shizuoka-ken (JP)
(72) Inventor: Sonobe, Masao, Shizuoka (JP)
(74) Representative: DIEHL GLAESER HILTL & PARTNER

(56) References cited:
- WO-A-81/03518
- DE-A- 3 710 381
- DE-A- 3 710 688
- GB-A- 2 152 473
- US-A- 4 276 697
- US-A- 4 338 052
- US-A- 4 820 114

## Description

The invention relates to a robot hand that allows a robot to perform operations such as sand removing and cutting in molding.

Document US-A-4820114 defining the closest prior art discloses a compliance apparatus comprising a robot hand mounted to a robot arm, whereby means are provided for taking up any relative positional deviations between an inserted part and an inserting part during the automatic assembly by a robot.

Document US-A-4338052 discloses a router which is mounted in a resilient support within a housing on the end of a robot arm to permit substantial lateral movement of the router relative to the housing in any radial direction.

However, the disclosed apparatuses can not be used in operations involving large external forces and vibrations.

For example, in molding, the operation of removing molding sand filled in a finished product and cutting off its unnecessary parts are performed by dedicated machines.

However, such a conventional technique using the special machines requires a plurality of machines dedicated to respective types of work, hence elevating the cost and deteriorating the operation efficiency.

While it is conceivable to employ robots in place of dedicated machines, the use of robots in the operations of sand removing and cutting which involve large external force and vibration leads to the problem that the robots are likely to break down due to their exposure to such external force and vibration.

The invention has been made in view of the above circumstances. Accordingly, an object of the invention is to provide a robot hand that permits a robot to perform operations involving external force and vibration.

This object is solved by the robot hand of independent Claim 1. Further advantageous features, aspects and details of the invention are evident from the dependent claims, the description, and the drawings. The claims are intended to be understood as a first non-limiting approach of defining the invention in general terms.

The invention achieves the aforementioned object by shutting off the transmission of the external force and vibration to the robot body.

To achieve the above aspect, the invention is applied to a robot hand that includes a coupling member releasably mounted on a robot body and a holding member for holding a workpiece, whereby the holding member is arranged inside said coupling member interposing a predetermined gap therebetween. The robot hand further comprises means arranged within said gap for selectively supporting said holding member to said coupling member elastically and means for selectively coupling said holding member to said coupling member rigidly.

According to the invention, even if the workpiece held by the holding member receives external force and vibration, the external force and vibration are effectively absorbed by the elastic members that couple the holding member with the coupling member. Therefore, transmission of the external force and vibration of the robot body is shut off, thus precluding the likelihood that the robot body will fail while affected by the external force and vibration. As a result, operations such as sand removing and cutting in molding can be performed by a robot, thereby allowing the operation efficiency to be improved and achieving a cost reduction.
Figure 1 is a broken-out sectional view of a robot hand of the invention, and
Figure 2 is a side view showing an operation using a robot.

An embodiment of the invention will now be described with reference to the accompanying drawings.

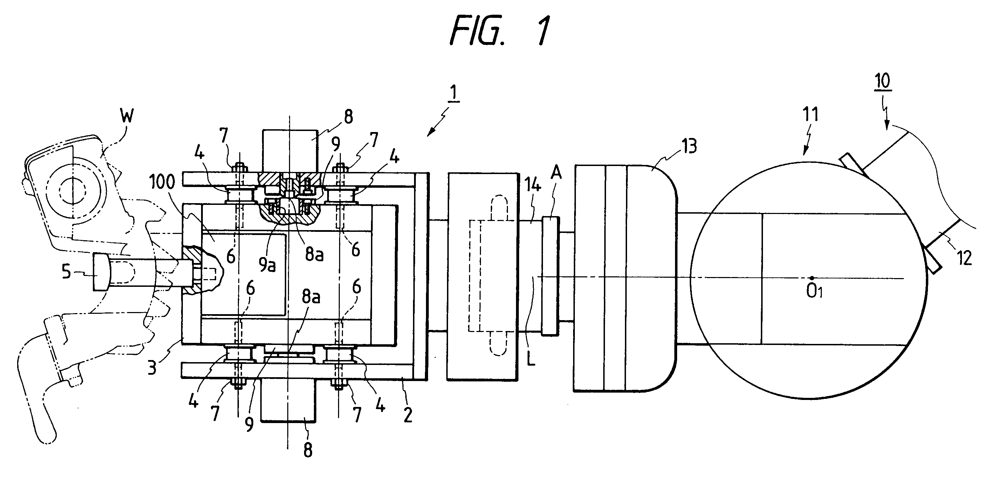

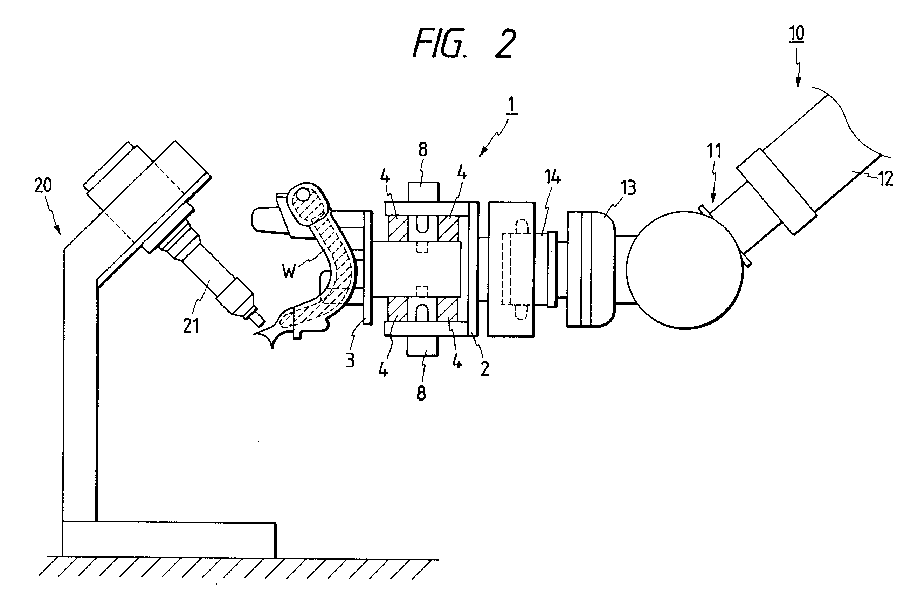

Figure 1 is a broken-out sectional view of a robot hand of the invention and Figure 2 is a side view showing an operation using a robot.

In Figure 1, reference numeral 10 designates a vertical articulated industrial robot. A rotatable α-shaft 13 is provided on an end of an arm 12 of the robot body 11, the α-shaft 13 being connected to an auto hand changer (AHC) 14 that automatically engages and disengages a robot hand 1 of the invention.

As shown in Fig. 1, the robot hand 1 is rotatable about an axis O₁ which is perpendicular to a paper surface of Fig. 1 and a mounting portion A of the auto hand changer (AHC) 14 is rotatable about an L-axis which is directed to an longitudinal axis of the mounting portion A.

By the way, in the robot band 1, reference numeral 2 designates a coupling member that in removably mounted on the auto hand changer 14. On an end of the coupling member 2 is a holding member 3 that is elastically supported through four (4) vibration isolating rubber pieces 4 ···. The holding member is a jig for holding a workpiece W (a manifold of an internal combustion engine in the illustrated example). More specifically, the holding member 3 is arranged inside the coupling member 2 interposing a predetermined gap therebetween. Each of the upper and lower gaps is maintained by the two (2) vibration isolating rubber pieces 4, 4 so that the coupling member 2 and the holding member 3 are vertically supported elastically. As shown in Fig. 1, the two (2) vibration isolating rubber pieces 4, 4 maintaining each of the upper and lower gaps are coaxially provided each other. On an end of the coupling member 2 is the workpiece W held by a pin 5. Each vibration isolating rubber piece 4 is secured by a bolt 6 and a nut 7. The pin 5 is reciprocatably driven by a cylinder 100 in such a manner that the workpiece W is held by the pin 5.

On the upper and lower portions of the coupling member 2 are cylinders 8, 8 provided so as to confront each other, and the rod 8a of each cylinder 8 vertically reciprocates by passing through the coupling member 2. If each cylinder 8 is driven to cause the rod 8a to expand from the position shown in Figure 1, then each rod 8a is tightly fitted with a circular, hole 9a of a flange-like positioning member 9 that is mounted on the holding member 3. In addition, the rods 8a are coaxially provided with each other.

The operation of the robot hand 1 of the invention will be described next, taking as an example the case where sand removing in molding is performed using the robot 10.

As shown in Figure 2, the workpiece W is supported by the arm 12 of the robot 10 through the robot hand 1. When vibration is applied to the workpiece W by an impact hammer 21 of a vibrator 20, the molding sand filled within the workpiece W is shaken down by the vibration.

In this case, the holding member 3 of the robot hand 1 which holds the workpiece W starts vibrating together with the workpiece W to receive the external force from the impact hammer 21. However, the vibration isolating rubber pieces 4 ··· are interposed between the holding member 3 and the coupling member 2 and, as a result, the external force and vibration received by the holding member 3 can effectively be absorbed by the vibration isolating rubber pieces 4 ···, thus suppressing the transmission of the external force and vibration toward the coupling member 2. Therefore, the transmission of the external force and vibration to the robot body 11 can be obviated, thereby eliminating the shortcoming that the robot body 11 is susceptible to breakdown due to its being exposed to the external force and vibration. As a result, the robot 10 can be employed for the operations of removing sand and cutting which involve large external force and vibration in molding, and this contributes to improving the operation efficiency and reducing the cost compared to the case where the dedicated machines are employed in the conventional molding operations.

By the way, some operations require that the workpiece W be rigidly supported. In such a case, the cylinders 8, 8 are driven, as described previously, to bring the respective rods 8a into tight engagement with the circular holes 9a of the positioning members 9. As a result, the coupling member 2 and the holding member 3 can be rigidly coupled with each other, which in turn allows the workpiece W to be rigidly supported with respect to the robot body 11.

As is apparent from the foregoing description, the invention is constructed bye coupling the coupling member removably mounted on the robot body with the holding member holding the workpiece through the elastic members. As a result of the construction, the transmission of external force and vibration to the robot body can be shut off, thereby providing the advantage that the operations involving external force and vibration can be performed by a robot.

## Claims

1. A robot hand (1) for holding a workpiece (W) on a robot arm (12) including a coupling member (2) releasably mounted on a robot body (11) and a holding member (3) arranged inside said coupling member (2) interposing a predetermined gap therebetween
CHARACTERIZED by further comprising:
a) means (4) arranged within said gap for selectively supporting said holding member (3) to said coupling member (3) elastically, such that any external force and vibration received by the holding member (3) can be absorbed by the means (4).
b) means (8, 9) for selectively coupling said holding member (3) to said coupling member (2) rigidly.

2. A robot hand according to claim 1, wherein the means for elastically supporting said holding member (3) comprise a plurality of vibration isolating rubber pieces (4) being arranged around said gap.

3. A robot hand according to claim 1 or 2, in which said rigidly supporting means comprises a pair of cylinders (8) which are provided on said coupling member (2) so as to confront each other, each said cylinders (8) having a rod (8a) reciprocating relative to said cylinder (8), and said holding member (3) has a plurality of circular holes (9a), said rods (8a) being tightly fitted with said circular holes (9a) respectively when said rods (8a) are expanded.

4. A robot hand according to claim 3, in which said circular holes (9a) are provided with a pair of flange-like positioning members (9) respectively, said flange-like positioning members (9) being mounted on said holding member (3).

5. A robot hand according to claim 4, in which said rod (8a) reciprocates by passing through said positioning member (9).

## Patentansprüche

1. Roboterhand (1) zum Halten eines Werkstücks (W) auf einem Roboterarm (12) mit einem Kupplungselement (2), welches abnehmbar auf einem Roboterkörper (11) angebracht ist, und einem Halteelement (3), welches innerhalb des Kupplungselements (2) angeordnet ist, wobei dazwischen ein vorbestimmter Spalt liegt
des weiteren GEKENNZEICHNET DURCH:
a) in dem Spalt angeordnete Mittel (4) zum wahlweisen elastischen Halten des Halteelements (3) gegen das Kupplungselement (2), so daß jegliche auf das Halteelement (3) einwirkende äußere Kraft und Schwingung von den Mitteln (4) aufnehmbar ist.
b) Mittel (8, 9) zur wahlweisen starren Verbindung des Halteelements (3) mit dem Kupplungselement (2).

2. Roboterhand gemäß Anspruch 1, bei der die Mittel zum elastischen Halten des Halteelements (3) eine Mehrzahl von schwingungsabsorbierenden Gummistücken (4) aufweisen, welche um den Spalt herum angeordnet sind.

3. Roboterhand gemäß Anspruch 1 oder 2, bei der das starr haltende Mittel ein Paar Zylinder (8) aufweist, welche so auf dem Kupplungselement (2) angeordnet sind, daß sie sich gegenüberliegen, wobei jeder der Zylinder (8) einen Stab (8a) aufweist, welcher sich relativ zu dem Zylinder (8) hin- und herbewegt, und bei der das Halteelement (3) eine Mehrzahl kreisförmiger Öffnungen (9a) aufweist, wobei die Stäbe (8a) jeweils genau in die kreisförmigen Öffnungen (9a) eingepaßt sind, wenn sich die Stäbe (8a) ausdehnen.

4. Roboterhand gemäß Anspruch 3, bei der die kreisförmigen Öffnungen (9a) jeweils mit einem Paar flanschartiger Positionierelemente (9) versehen sind, wobei die flanschartigen Positionierelemente (9) auf dem Halteelement (3) angebracht sind.

5. Roboterhand gemäß Anspruch 4, bei der der Stab (8a) sich hin- und herbewegt, indem er sich durch das Positionierelement (9) bewegt.

## Revendications

1. Main de robot (1) destinée à tenir une pièce (W) sur un bras de robot (12), comprenant un élément d'accouplement (2) monté de façon amovible sur un corps de robot (11), et un élément de préhension (3) agencé à l'intérieur dudit élément d'accouplement (2) en ménageant entre eux un intervalle libre prédéterminé,
caractérisé en ce qu'il comprend en outre :
a) des moyens (4) disposés dans ledit intervalle libre pour donner sélectivement un appui élastique audit élément de préhension (3) sur ledit élément d'accouplement (2), de telle manière que les forces extérieures et vibrations éventuellement reçues par l'élément de préhension (3) puissent être absorbées par les moyens (4),
b) des moyens (8, 9) servant à accoupler rigidement ledit élément de préhension (3) audit élément d'accouplement (2).

2. Main de robot selon la revendication 1, dans laquelle les moyens servant à donner un appui élastique audit élément de préhension (3) comprennent une pluralité de pièces de caoutchouc (4) d'isolation des vibrations qui sont disposées sur le tour dudit intervalle libre.

3. Main de robot selon la revendication 1, ou 2, dans laquelle lesdits moyens de support rigide comprennent une paire de vérins (8) qui sont prévus face à face sur ledit élément d'accouplement (2), chacun desdits vérins (8) ayant une tige (8a) qui coulisse dans les deux sens par rapport audit vérin (8), et ledit élément de préhension (3) présente une série de trous circulaires (9a), lesdites tiges (8a) étant ajustées sans jeu par rapport auxdits trous circulaires (9a) respectivement lorsque lesdites tiges (8a) sont mises en extension.

4. Main de robot selon la revendication 3, dans laquelle lesdits trous circulaires (9a) sont munis respectivement d'une paire d'éléments de positionnement (9) en forme de collerette, lesdits éléments de positionnement (9) en forme de collerette étant montés sur ledit élément de préhension (3).

5. Main de robot selon la revendication 4, dans laquelle ladite tige (8a) coulisse dans les deux sens en passant à travers ledit élément de positionnement (9).
